# EUROPEAN PATENT SPECIFICATION

(11) **EP 3 391 742 B1**
(45) Date of publication and mention of the grant of the patent: **21.04.2021**
(21) Application number: 18166517.5
(22) Date of filing: 10.04.2018
(51) Int. Cl.: A01K 61/65, B63B 21/00, B63B 22/04

(54) **MOORING PLATE FOR FISH FARM**
VERANKERUNGSPLATTE FÜR EINE FISCHFARM
PLAQUE D'AMARRAGE DE PISCICULTURE

(30) Priority: 11.04.2017 NO 20170618
(43) Date of publication of application: 24.10.2018
(73) Proprietor: SHM Solutions AS, 6422 Molde (NO)
(72) Inventor: Bøe Myklebust, Yngve, 6421 Molde (NO); Helseth, Odd Arne, 6413 Molde (NO); Salthammer, Jørn Lund, 6390 Vestnes (NO)
(74) Representative: Acapo AS

(56) References cited:
- RU-C2- 2 225 604
- SK-U1- 702 016
- US-A- 5 932 815

## Description

### Field of the Invention

The present invention relates to a mooring plate for fish farm installations, comprising a plate body equipped with several coupling points for anchoring lines, frame lines, crow feet and the like, and also a suspension point for connecting to a buoy.

### Background to the invention

Both for conventional fish farm installations, closed net cage solutions and more exposed production installations, the anchoring work will be steadily more important, in particular to avoid escapes.

Furthermore, it is a requirement that a mooring shall keep the fish farm installation in the right position and in a three-dimensional state. The mooring shall not influence the rest of the installation in such a way that the danger of escape of the farmed fish increases. This means that the mooring shall be constructed according to the natural layout and use of the localities, and also by the characteristics that are given by the manufacturer of the float collar. The mooring shall also be constructed from information about additional loads from the net bag and any additional equipment, and also information about how these move during use and in all environmental conditions that can arise.

### Description of prior art

It is known that loads in a fish farming installation can be measured. Furthermore, solutions are known for the monitoring of strains in moorings, frame ropes and crow feet, and which can be carried out together with real-time measurements of currents and waves to get the information about external strains and how the installation is affected. In this case equipment for measuring of, for example, tension in ropes or chains or measuring of tensions in load shackles is used.

Furthermore reference is given to AQUALINE "Adaption of components to floating fish farm installations, how to prevent fish escaping", December 2011 (http://sjomatnorge.no/wpcontent/uploads/importedfiles/Aqualine_rommingssikringsk urs.pdf). Mooring plates are known from said publication that are comprised of a plate body equipped with several coupling points for anchoring lines, frame lines, crow feet and the like, and also a suspension point for connecting to a buoy. The corresponding is known from CN 106305560 A. However, none of the publications shows the use of load cells.

As examples of further prior art, reference is made to WO2009/142501 A2, NO319918 B1, US5932815 A, WO2010/112603 A1 and US2011/0131970 A1 which show the use of load cells. Common to the documents is that the load cells are fitted in the anchoring equipment on the construction that is anchored US 5 964 550 A discloses a mooring plate comprising a plate equipped with a connecting point for anchoring tendons, wherein the plate comprises a number of load cells for registration of forces that act on the plate, and wherein the load cells are connected with a communication equipment for sending of registered data to an external receiver.

Reference is also made to RU 2225604 C2 and SK 702016 U1.

### The aim of the present invention

It is an object of the invention that it shall be possible to measure the forces internally on the mooring plate.

The advantage of being able to measure the forces internally on the mooring plate is that by measuring internally on the plate one does not need to take into consideration what is coupled to the different holes on the plate as this varies from installation to installation. A typical mooring plate has readily up to 18-24 holes. At the same time, it will be simpler to collect the signals from the measuring points internally on the plate against collecting the signals from each individual line. It will also be simpler to be able to replace an old plate with a new plate with sensors, instead of retrofitting sensors on each individual item that is connected to the plate, which will reduce the maintenance costs, among other things.

It is also an object of the invention to be able to monitor and log the forces in the whole installation.

Furthermore, one aims to provide an alternative mooring plate, where registered forces that the plate is subjected to can be transferred externally so that the forces in the installation can be monitored.

### Summary of the invention

The above mentioned objects are reached with a mooring plate for fish farm installations, comprising a plate equipped with several connection points for shackles connecting anchoring lines, frame lines, crow feet and the like, and a suspension point for connecting to a buoy, in which the plate body comprises a number of load cells for registering of forces that affect the plate and where the load cells are connected with communication equipment for the transmission of registered data to an external receiver. The connecting points for the shackles are placed radially and in a circular pattern on the plate, and the load cells are placed between an outer circumference of the plate and respective connecting points.

The load cells can be strain gauges, where the load cells can be placed in sealed hollow spaces in the plate.

The load cells are preferably placed in, or adjoining said coupling points, and possibly in the suspension point.

The communication equipment can be placed on the plate and the load cells can, in a communicative way, be connected to the communication equipment.

Alternatively, the communication equipment can be placed on or at the buoy and the load cells can be connected, in a communicative way, to the communication equipment.

The load cells can be connected to the communication equipment with the help of respective wires.

Furthermore, said communication equipment can be set up for wireless or cabled transmission of registered data to the external receiver.

The load cells can be set up to measure the strain out from the plate by measuring strains in an area adjoining each coupling point in the plate.

In addition, the plate can comprise sensors for measurement of water flow, wave height, salt content, temperature, etc., and also equipment for camera monitoring and distance monitoring.

### Description of the figures

Preferred embodiments of the invention shall be described in the following in more detail with reference to the enclosed figures, in which:
Figures 1 and 2 show a mooring plate according to the invention.
Figure 3 shows the mooring plate suspended in a buoy.
Figure 4 shows a typical frame anchoring of a net cage.
Figure 5 shows a typical frame anchoring of several net cages.

### Description of preferred embodiments of the invention

With mooring is meant a complete system of lines and bottom anchorage points to hold a float collar or a raft in a desired position. The expression "line" or "lines" is used to describe ropes, straps, chains, etc., and combinations of these.

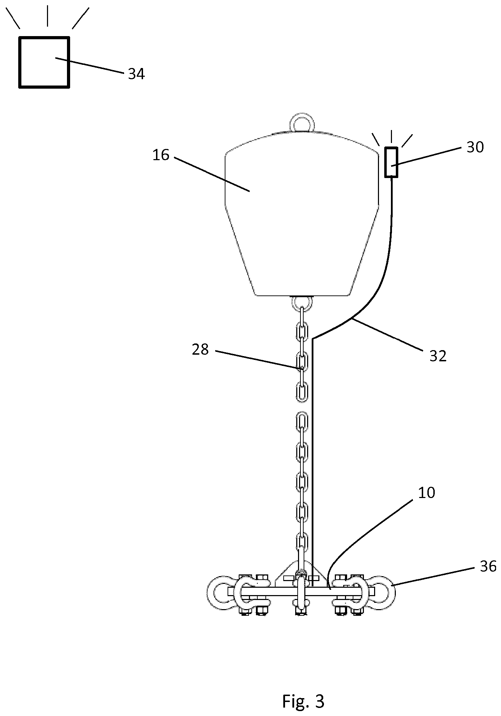

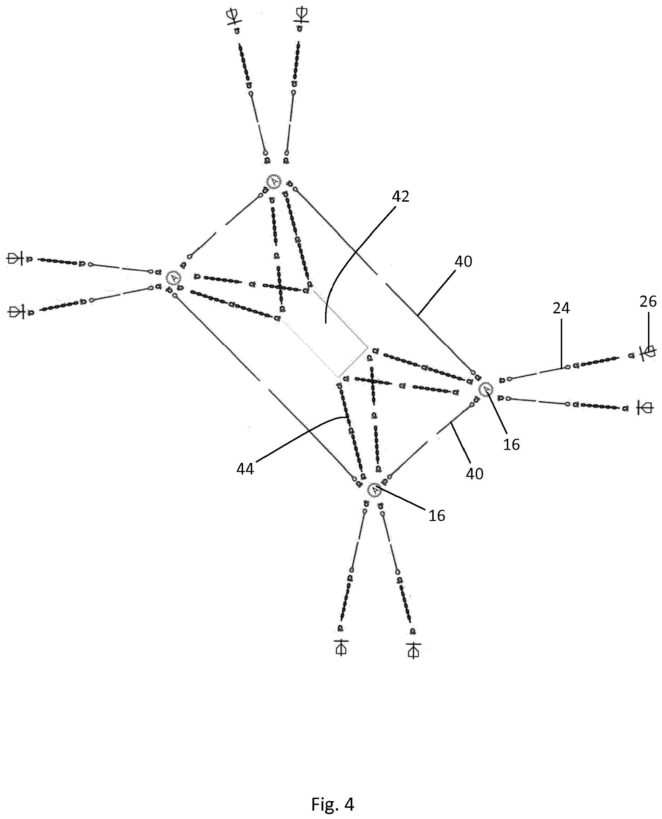

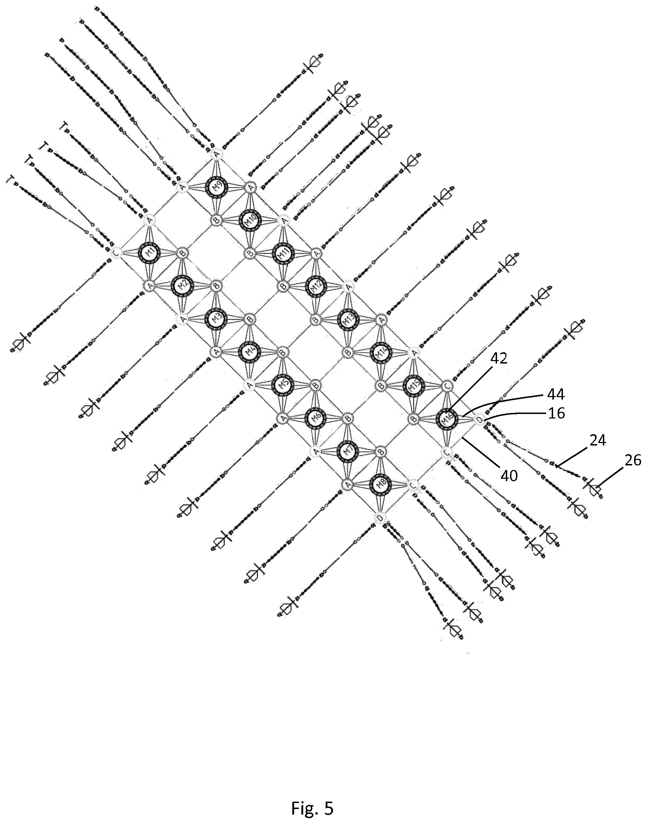

Mooring systems for frame anchoring of fish farm installations, as shown in figures 4 and 5, are comprised of typical anchoring lines or anchor lines 24, which are fastened at the bottom end to the seabed via an anchor or a bolt 26. The anchorage lines 24 are fastened at the other end to a mooring plate which, via a buoy rope or chain 28 (shown in figure 3) is suspended in a buoy 16. The frame rope 40 runs between the mooring plates. The net cage 42 or net cages (in figure 5 marked as M1.....M16) are also fastened to the mooring plates via a chain or crow feet 44.

Figure 3 shows a standard suspension for a mooring plate, where a plate body 10 is suspended in a chain 28 fastened to the buoy 16. The mooring plates form the connecting points in the mooring. These plates 10 normally lie 8-12 m below the ocean surface. The different lines and chains are normally secured to the mooring plates with the help of shackles 36, as shown in figure 3. The circles marked A in figure 4 illustrate the buoys 16, while the circles marked A - D in figure 5 illustrate the buoys 16.

Figure 4 shows a simple anchorage of a net cage but, as can be seen, the mooring is relatively complex, both to guard against damages to the installation and prevention of escape, but also so that the installation shall take up the least area possible.

Figure 5 shows a complex installation with sixteen net cages, and as can be seen, the mooring is considerably more complex than the relatively "simple" mooring shown in figure 4, and with the same aim as given above.

However, in both cases it is important to monitor strains in the fish farm installation with associated moorings, and possibly with monitoring of currents and waves to have information about external influences and how the installation is loaded. The installations are dimensioned to tolerate failures in some of the individual components, however, serious failures or breakdowns can have unforeseen drastic consequences that can be costly and increase the risk of fish escapes.

The mooring itself is considered to be designed in a traditional way, for example, such as shown in the figures 4 and 5, and therefore is not explained in any detail as a person skilled in the arts will have sufficient knowledge of how the mooring can best be carried out.

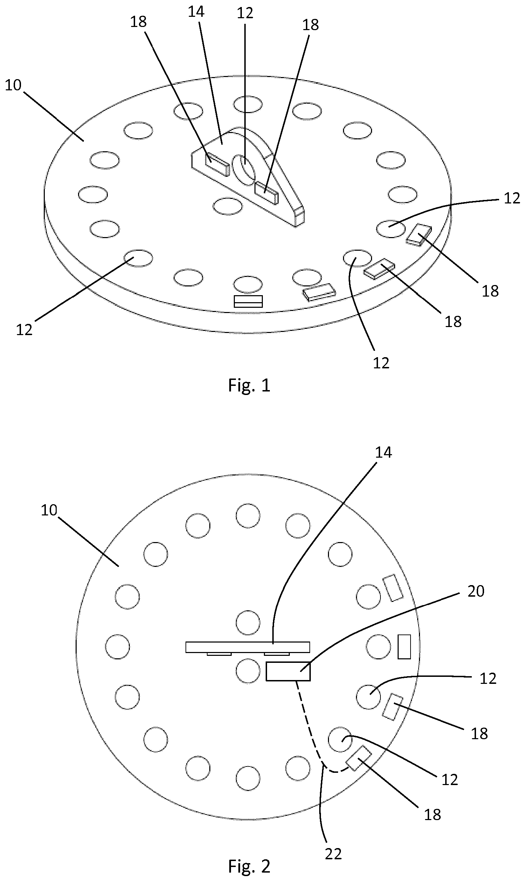

The mooring plate 10 according to the invention is shown in more detail in figures 1 and 2, and is normally comprised of a mainly circular plate body 10 equipped with several connecting points 12 in the form of holes for the shackles 36, and also a suspension point 14 in the form of a lifting lug or the like for the fastening of the chain 28 from the buoy 16, and with a corresponding connecting point 12 in the form of a hole.

The connecting points 12 for the shackles 36 are placed radially and in a circular pattern on the plate 10.

The plate 10 comprises load cells 18, possibly in the form of strain gauges, such that the forces in each individual plate, and also the forces in the whole installation, can be monitored and logged. In this way, it is possible to measure all the strains out from the plate 10 by measuring the strain in the area on, or at, each connecting point 12 in the plate 10. In addition, the lifting lug 14 can also incorporate load cells 18 for the monitoring of suspension forces.

The load cells 18 are placed between the outer circumference of the plate 10 and respective connecting points 12, as shown in figures 1 and 2. In a non-claimed example, load cells 18 can also be placed on respective sides of the connecting point 12 on the lifting lug 14, or above or underneath the connecting point on the lifting lug 14.

In a non-claimed example, load cells 18 can also be situated on other places on the plate 10 than what is shown and explained.

With the use of, for example, tension gauges, these can be glued in place in machined hollow spaces (not shown) in the plate 10, whereupon the hollow spaces are sealed. The signals from all the tension gauges can be collected together and be led up to the ocean surface for monitoring and analysis of the affecting forces in the whole of, or approximately all parts of, the plate 10 which is affected.

The load cells 18 can, for example, be connected via respective wires 22,32 to communication equipment 20 mounted on the plate 10 and/or communication equipment 30 fitted on or at the buoy 16. The communication equipment 20,30, possibly in the form of a transmitter and a receiver, can send signals either wirelessly or via a cable (not shown) received from the load cells 18 to an external receiver 34. The external receiver 34 can be placed on the fish farm installation or it can be placed in a communication central/control room.

In an alternative embodiment, the load cells 18 can wirelessly send data directly to the communication equipment 20,30.

In a further alternative embodiment, the load cells 18 can wirelessly send data directly to the surface and further to the external receiver 34.

Registered data can be used for preventative actions, and also immediate actions based on real-time information from the system.

## Claims

1. Mooring plate for fish farm installations, comprising:
a plate (10) equipped with several connecting points (12) for shackles (14) connecting anchoring lines, frame lines, crow feet and the like, and
a suspension point (14) for connection to a buoy (16),
wherein
the plate (10) comprises a number of load cells (18) for registration of forces that act on the plate (10),
the load cells (18) are connected with a communication equipment (20;30) for sending of registered data to an external receiver (34),
the connecting points (12) for the shackles (36) are placed radially and in a circular pattern on the plate (10), and
the load cells (18) are placed between an outer circumference of the plate (10) and respective connecting points (12).

2. Mooring plate according to claim 1, **characterised in that** the load cells (18) are strain gauges.

3. Mooring plate according to claim 1, **characterised in that** the load cells (18) are placed in sealed hollow spaces in the plate (10).

4. Mooring plate according to claim 1, **characterised in that** the load cells (18) are placed in or adjoining to said connecting points (12) and possibly in or adjoining the suspension point (14).

5. Mooring plate according to claim 1, **characterised in that** the communication equipment (20) is placed on the plate (10) and that the load cells (18) are connected with the communication equipment (20) in a communicative way.

6. Mooring plate according to claim 1, **characterised in that** the communication equipment (30) is placed on or at the buoy (16) and that the load cells (18) are connected with the communication equipment (30) in a communicative way.

7. Mooring plate according to claim 5 or 6, **characterised in that** the load cells (18) are connected with the communication equipment (20;30) with the help of respective wires (22;32).

8. Mooring plate according to claim 1, **characterised in that** said communication equipment (20;30) is arranged for wireless or cabled transmission of registered data to the external receiver (34).

9. Mooring plate according to claim 1, **characterised in that** the load cells (18) are arranged to measure strain out from the plate (10) by measuring strain in an area adjoining each connecting point (12) in the plate (10).

10. Mooring plate according to claim 1, **characterised in that** the plate (10) comprises sensors for measurement of water current, wave height, salt content, temperature, etc., and equipment for camera monitoring and distance monitoring.

## Patentansprüche

1. Verankerungsplatte für Fischzuchtanlagen, umfassend:
eine Platte (10), die mit mehreren Verbindungspunkten (12) für Schäkel (14) ausgestattet ist, die Ankerleinen, Rahmenleinen, Krähenfüße und dergleichen verbinden, und
einen Aufhängepunkt (14) zur Verbindung mit einer Boje (16), wobei
die Platte (10) eine Anzahl von Wägezellen (18) zur Registrierung von Kräften, die auf die Platte (10) wirken, aufweist, wobei die Wägezellen (18) mit einer Kommunikationsausrüstung (20; 30) zum Senden registrierter Daten an einen externen Empfänger (34) verbunden sind,
die Verbindungspunkte (12) für die Schäkel (36) radial und kreisförmig auf der Platte (10) angeordnet sind, und
die Wägezellen (18) zwischen einem Außenumfang der Platte (10) und den jeweiligen Verbindungspunkten (12) angeordnet sind.

2. Verankerungsplatte nach Anspruch 1, **dadurch gekennzeichnet, dass** die Wägezellen (18) Dehnungsmessstreifen sind.

3. Verankerungsplatte nach Anspruch 1, **dadurch gekennzeichnet, dass** die Wägezellen (18) in abgedichteten Hohlräumen in der Platte (10) angeordnet sind.

4. Verankerungsplatte nach Anspruch 1, **dadurch gekennzeichnet, dass** die Wägezellen (18) in oder angrenzend an die Verbindungspunkte (12) und möglicherweise in oder angrenzend an den Aufhängepunkt (14) angeordnet sind.

5. Verankerungsplatte nach Anspruch 1, **dadurch gekennzeichnet, dass** die Kommunikationsausrüstung (20) auf der Platte (10) angeordnet ist und dass die Wägezellen (18) mit der Kommunikationsausrüstung (20) kommunikativ verbunden sind.

6. Verankerungsplatte nach Anspruch 1, **dadurch gekennzeichnet, dass** die Kommunikationsausrüstung (30) auf oder an der Boje (16) platziert ist und dass die Wägezellen (18) mit der Kommunikationsausrüstung (30) kommunikativ verbunden sind.

7. Verankerungsplatte nach Anspruch 5 oder 6, **dadurch gekennzeichnet, dass** die Wägezellen (18) mit Hilfe von entsprechenden Drähten (22; 32) mit der Kommunikationsausrüstung (20; 30) verbunden sind.

8. Verankerungsplatte nach Anspruch 1, **dadurch gekennzeichnet, dass** die Kommunikationsausrüstung (20; 30) zur drahtlosen oder kabelgebundenen Übertragung registrierter Daten an den externen Empfänger (34) eingerichtet ist.

9. Verankerungsplatte nach Anspruch 1, **dadurch gekennzeichnet, dass** die Wägezellen (18) so angeordnet sind, dass sie eine Dehnung aus der Platte (10) heraus messen, indem sie eine Dehnung in einem Bereich messen, der an jeden Verbindungspunkt (12) in der Platte (10) angrenzt.

10. Verankerungsplatte nach Anspruch 1, **dadurch gekennzeichnet, dass** die Platte (10) Sensoren zur Messung einer Wasserströmung, einer Wellenhöhe, eines Salzgehalts, einer Temperatur usw. sowie eine Ausrüstung zur Kameraüberwachung und Abstandsüberwachung umfasst.

## Revendications

1. Plaque d'amarrage pour installations de pisciculture, comprenant :
une plaque (10) équipée de plusieurs points de raccordement (12) pour des étriers (14) reliant des lignes d'ancrage, des lignes de cadre, des pattes d'oie et similaire, et
un point de suspension (14) permettant de se connecter à une bouée (16),
dans laquelle
la plaque (10) comprend un certain nombre de cellules de charge (18) permettant de régler les forces qui agissent sur la plaque (10),
les cellules de charge (18) sont raccordées à un équipement de communication (20 ; 30) afin d'envoyer des données enregistrées à un récepteur externe (34),
les points de raccordement (12) pour les étriers (36) sont placés de manière radiale et selon un motif circulaire sur la plaque (10), et
les cellules de charge (18) sont placées entre une circonférence extérieure de la plaque (10) et des points de raccordement respectifs (12).

2. Plaque d'amarrage selon la revendication 1, **caractérisée en ce que** les cellules de charge (18) sont des jauges de contrainte.

3. Plaque d'amarrage selon la revendication 1, **caractérisée en ce que** les cellules de charge (18) sont placées dans des espaces creux scellés dans la plaque (10).

4. Plaque d'amarrage selon la revendication 1, **caractérisée en ce que** les cellules de charge (18) sont placées dans ou près desdits points de raccordement (12) et éventuellement dans ou près du point de suspension (14).

5. Plaque d'amarrage selon la revendication 1, **caractérisée en ce que** l'équipement de communication (20) est placé sur la plaque (10) et **en ce que** les cellules de charge (18) sont raccordées à l'équipement de communication (20) de manière communicative.

6. Plaque d'amarrage selon la revendication 1, **caractérisée en ce que** l'équipement de communication (30) est placé sur ou au niveau de la bouée (16) et **en ce que** les cellules de charge (18) sont raccordées à l'équipement de communication (30) de manière communicative.

7. Plaque d'amarrage selon la revendication 5 ou 6, **caractérisée en ce que** les cellules de charge (18) sont raccordées à l'équipement de communication (20 ; 30) à l'aide des fils respectifs (22 ; 32).

8. Plaque d'amarrage selon la revendication 1, **caractérisée en ce que** ledit équipement de communication (20 ; 30) est agencé pour une transmission sans fil ou filaire de données enregistrées au récepteur externe (34).

9. Plaque d'amarrage selon la revendication 1, **caractérisée en ce que** les cellules de charge (18) sont agencées pour mesurer la contrainte de la plaque (10) en mesurant la contrainte dans une zone adjacente à chaque point de raccordement (12) dans la plaque (10).

10. Plaque d'amarrage selon la revendication 1, **caractérisée en ce que** la plaque (10) comprend des capteurs permettant de mesurer le courant d'eau, la hauteur de vague, la teneur en sel, la température, etc, et un équipement pour la surveillance par caméra et la surveillance à distance.
